# EUROPEAN PATENT APPLICATION

(11) **EP 1 233 262 A1**
(43) Date of publication of application: **21.08.2002**
(21) Application number: 01956910.2
(22) Date of filing: 15.08.2001
(51) Int. Cl.: G01N 21/78

(54) **CHEMICAL SENSOR AND METHOD OF DETECTING CHEMICAL**

(30) Priority: 23.08.2000 JP 2000252358; 23.07.2001 JP 2001221879
(71) Applicant: Sanyo Electric Co., Ltd., Moriguchi-shi, Osaka-fu 570-8677 (JP)
(72) Inventor: IKEMATSU, Mineo, Moriguchi-shi, Osaka 570-8677 (JP)
(74) Representative: Denison, Christopher Marcus
(86) International application number: JP0107048
(87) International publication number: WO02016915

(57) **Abstract**

A chemical substance sensor comprises a microplate including a plurality of holes storing reaction solutions, an air introducer, a light source, a first wavelength selector, a second wavelength selector, a fluorescence detector and a data processor. The reaction solutions contain bovine derivation odorant binding protein. The air introducer introduces air containing odorants into the reaction solutions. Thus, the odorant binding protein contained in the reaction solutions is bonded with the odorants. The odorants in the air are detected by detecting fluorescence obtained when irradiating the odorant binding protein bonded with the odorants with light.

## Description

### Technical Field

The present invention relates to a chemical substance sensor detecting a chemical substance contained in a sample and a method of detecting a chemical substance.

### Background Art

Detection of an odorant is performed as one of control tests for the quality of an item such as food, for example. In this specification, a chemical substance causing an odor is generically referred to as an odorant. Detection of this odorant is employed for detecting an odor caused when prepared or reserved food or the like is deteriorated or detecting an odor of a container such as a PET bottle getting into food contained therein, for example. An attempt is made to detect the odor of powder forming a mine from the ground surface thereby locating the mine.

Such an odorant has been generally detected by employing a macromolecular substance or a membrane, for example, and measuring change of the conductivity of the substrate or change of the membrane potential when the odorant adheres to the substrate or the membrane.

In such a method, however, it is disadvantageously difficult to distinguish bonding of the odorant from bonding of a substance other than the odorant. In order to avoid this problem, therefore, methods employing antibodies are developed ("J. E. Roederer and G. J. Bastiaans, Anal. Chem. 55 (1983) 2333.", "K. A. Davis and T. R. Leary, Anal. Chem. 61 (1989) 1227.", "H. Muramatsu et al., Anal. Chem., 59 (1987) 2760.", "M. Thompson et al., IEEE Trans. Ultrasonics, Ferroelectrics, Frequency Control, UFFC-34 (1987) 127.", "M. Thompson et al., Anal. Chem., 58 (1986) 1206." and "F. Caruso et al., Colloid Interface Sci. 178(1996)104."). That is, an antibody is fixed to a macromolecular substrate or a membrane for bonding only a specific odorant to this antibody. The dielectric constant of the macromolecular substrate or the membrane potential changes when the specific odorant is bonded to this antibody, and hence the specific odorant is detected on the basis of this change so that bonding of non-specific substances can be eliminated.

A conventional odor sensor employing the aforementioned macromolecular substrate or the membrane generally has low sensitivity (up to ppm). Even if the sensitivity is high (up to ppb), substrate surface modification necessary for absorbing the odor is so deficient in variation (about 10-odd types at the most) that treatable odors have been limited.

In the detection method employing an antibody for the odorant, on the other hand, the antibody is so high-priced that it is costly to perform detection. In such a detection method employing the antibody, specificity in bonding between the antibody and the odorant is extremely high and hence it is necessary to prepare an antibody corresponding to each odorant in order to detect an odor formed by an extremely large number of substances in general. Therefore, a method of detecting a plurality of types of odorants with antibodies is impractical in consideration of the cost required for preparing the antibodies and thermal instability of the antibodies.

### Disclosure of the Invention

An object of the present invention is to provide a chemical substance sensor and a method of detecting a chemical substance capable of performing detection with high sensitivity at a low cost and applicable to a plurality of types of chemical substances having different bonding characteristics.

Various animals have olfactory organs for sensing and discriminating odors . The mechanism of such an olfactory organ is recently molecular-biologically analyzed. In this analysis, it has been clarified that an odorant is bonded with specific receptors present in epithelial cells of an olfactory mucosa or the like, and a signal is transmitted into the epithelial cells through the receptors for detecting and discriminating the odorant.

In detailed clarification of the mechanism of the series of detection and recognition of the odorant, protein bonded with the odorant (hereinafter referred to as odorant binding protein) is discriminated and isolated ("J. Pevsner et al., Science, 241 (1988) 336."). The odorant binding protein can be bonded not only to the odorant but also to a specific chemical substance having no odor.

As to biological action, it is presumed that this odorant binding protein has a function of being bonded with an odorant, carrying this odorant to receptors on epithelial cells and transferring the odorant to the receptors. This odorant binding protein has also been biochemically analyzed and proved to have wide-ranging bonding force, peaked on bonding force with respect to a certain odorant, for substances similar to this odorant ("J. Pevsner et al. J. Biolog. Chem. 265 (1990) 6118.", "M. A. Bianchet et al. Nature Struc. Biolog. 3 (1996) 934." and "M. Tegoni et al., Nature Struc. Biolog. 3 (1996) 863"). In particular, such odorant binding protein also includes that having a cloned gene (the aforementioned J. Pevsner et al.), and can also be subjected to mass production.

The inventor has noted such odorant binding protein, and deeply studied on a method of detecting a chemical substance with this odorant binding protein. As a result, the inventor has found it possible to detect an odorant having a constant width in high sensitivity by utilizing odorant binding protein. The inventor have devised the present invention as follows:

A chemical substance sensor according to the present invention detects a substance bonded to odorant binding protein.

In the chemical substance sensor according to the present invention, by detecting detects a substance bonded to odorant binding protein, detection can be performed in high sensitivity at a low cost and rendered applicable to a plurality of types of chemical substances having different bonding characteristics.
The odorant binding protein may have a dimer structure.

The chemical substance sensor according to the present invention comprises a storage that stores odorant binding protein having a dimer structure, a sample introducer for introducing a sample into the odorant binding protein stored in the storage, a light source that irradiates the odorant binding protein in the storage with excitation light, a fluorescence detector that detects fluorescence obtained from the odorant binding protein, and a data processor that processing data related to the intensity of the fluorescence detected by the fluorescence detector.

In order to determine presence/absence of a chemical substance in the sample with the chemical substance sensor according to the present invention, odorant binding protein having a dimer structure is first stored in the storage of the chemical substance sensor. Excitation light is emitted from the light source for exciting this odorant binding protein while detecting fluorescence obtained from the odorant binding protein by the fluorescence detector and processing data related to the fluorescence intensity in the data processor.

When the aforementioned chemical substance sensor continuously irradiates the odorant binding protein with the excitation light in this manner, the intensity of the fluorescence obtained from the odorant binding protein is attenuated. In this case, the sample is introduced into the odorant binding protein stored in the storage through the sample introducer for bringing the odorant binding protein and the sample into contact with each other when the fluorescence intensity is attenuated as described above.

When the odorant binding protein and the sample are brought into contact with each other as described above, a chemical substance in the sample is bonded with the odorant binding protein if the sample contains the chemical substance. Thus, the aforementioned attenuation of the fluorescence intensity is suppressed and recovery of the fluorescence intensity is observed. The fluorescence detector detects such recovery of the fluorescence intensity (suppression of attenuation), and the data processor processes data related to the detected fluorescence intensity. When the sample contains no chemical substance, on the other hand, the fluorescence intensity of the odorant binding protein is not recovered but remains attenuated. The fluorescence detector detects such attenuation of the fluorescence intensity, and the data processor processes data related to the detected fluorescence intensity.

When the aforementioned chemical substance sensor is employed, as hereinabove described, presence/absence of the chemical substance in the sample can be determined on the basis of the quantity of recovery (the quantity of attenuation suppression) of the fluorescence intensity when the sample is brought into contact with the odorant binding protein, and the chemical substance in the sample can be detected with high sensitivity. A method employing such a chemical substance sensor can be carried out at a lower cost as compared with the conventional method employing an antibody.

The odorant binding protein has wide-ranging bonding force, peaked on bonding force with respect to a certain odorant, for substances similar to this odorant. According to the aforementioned chemical substance sensor employing such odorant binding protein, therefore, chemical substances can be widely detected.

In a method employing such a chemical substance sensor, the quantity of recovery of the fluorescence intensity is increased as affinity between the chemical substance and the odorant binding protein is increased. Thus, the affinity between the chemical substance and the odorant binding protein and the quantity of recovery of the fluorescence intensity are correlative, and hence the affinity between the chemical substance and the odorant binding protein can be obtained on the basis of the quantity of recovery of the fluorescence intensity while the chemical substance can be discriminated and the odorant can be specified on the basis of difference in this affinity when the aforementioned chemical substance sensor is employed.

In the method employing such a chemical substance sensor, the quantity of recovery of the fluorescence intensity is increased as the quantity (concentration) of the chemical substance bonded to the odorant binding protein is increased. Thus, the quantity (concentration) of the chemical substance bonded to the odorant binding protein and the quantity of recovery of the fluorescence intensity are correlative, and hence the quantity (concentration) of the chemical substance in the sample can be measured, i.e., the chemical substance present in the sample can be determined when the aforementioned chemical substance sensor is employed.

The chemical substance sensor may further comprise a first wavelength selector that selectively transmits light of a specific wavelength in the excitation light emitted from the light source and a second wavelength selector that selectively transmits light of a specific wavelength in the fluorescence obtained from the odorant binding protein. In this case, only the light of the specific wavelength is selectively transmitted through the first wavelength selector in the excitation light emitted from the light source, and applied to the odorant binding protein. Further, only the light of the specific wavelength is selectively transmitted through the second wavelength selector in the fluorescence obtained from the odorant binding protein, and detected by the fluorescence detector.

The odorant binding protein may be bovine derivation odorant binding protein. Such bovine derivation odorant binding protein widely has affinity for terpenoid, esters, aldehydes, aromatic series and the like. When such bovine derivation odorant binding protein is employed for the aforementioned chemical substance sensor, therefore, wide-ranging chemical substances as described above can be sensed in high sensitivity.

The fluorescence obtained from the odorant binding protein is preferably fluorescence deriving from tryptophane forming the odorant binding protein. Fluorescence obtained from tryptophane can be readily and precisely detected due to high intensity. Therefore, measurement can be readily performed with high sensitivity and high precision by utilizing such fluorescence from tryptophane.

A method of detecting a chemical substance according to the present invention is directed for detecting a substance bonded to odorant binding protein.

In the method of detecting a chemical substance according to the present invention, the substance bonded to the odorant binding protein is so detected that detection can be performed in high sensitivity at a low cost and is applicable to a plurality of types of chemical substances having different bonding characteristics.

The odorant binding protein may have a dimer structure.

The method of detecting a chemical substance according to the present invention comprises steps of bringing a sample into contact with odorant binding protein having a dimer structure, irradiating the odorant binding protein brought into contact with the sample with excitation light for obtaining fluorescence from the odorant binding protein, detecting the fluorescence obtained from the odorant binding protein, and analyzing a chemical substance contained in the sample on the basis of the intensity of the detected fluorescence.

In the method of detecting a chemical substance according to the present invention, the sample is first brought into contact with the odorant binding protein having a dimer structure. When the sample contains a chemical substance, the chemical substance in the sample is bonded with the odorant binding protein. When the odorant binding protein bonded with the chemical substance is irradiated with the excitation light, attenuation of fluorescence intensity is suppressed in the fluorescence obtained from the odorant binding protein. When the sample contains no chemical substance, on the other hand, no chemical substance is bonded to the odorant binding protein, and hence fluorescence intensity is attenuated in the fluorescence obtained from the odorant binding protein.

In the aforementioned method of detecting a chemical substance, therefore, presence/absence of the chemical substance in the sample can be determined on the basis of the quantity of attenuation suppression of the fluorescence intensity when the sample is brought into contact with the odorant binding protein, and the chemical substance in the sample can be detected in high sensitivity. Such a method of detecting a chemical substance can be carried out at a lower cost as compared with the conventional method employing an antibody.

The odorant binding protein has wide-ranging bonding force, peaked on bonding force with respect to a constant odorant, also for chemical substances similar to this odorant, and hence chemical substances can be widely detected according to the aforementioned detection method employing the odorant binding protein.

The step of analyzing may include a step of comparing the intensity of fluorescence obtained from the odorant binding protein bonded with no chemical substance with the intensity of the detected fluorescence and determining presence/absence of the chemical substance on the basis of the result of the comparison.

As hereinabove described, the intensity of the fluorescence obtained from the odorant binding protein is attenuated in the odorant binding protein bonded with no chemical substance due to irradiation with the excitation light. The fluorescence intensity of such odorant binding protein bonded with no chemical substance is employed as the reference for observing whether or not the aforementioned detected fluorescence intensity is recovered as compared with this reference (whether or not attenuation of the fluorescence intensity is suppressed). According to such comparison, presence/absence of the chemical substance in the sample can be determined.

The step of analyzing may include a step of analyzing affinity between the chemical substance contained in the sample and the odorant binding protein on the basis of the intensity of the detected fluorescence and discriminating the chemical substance contained in the sample on the basis of the affinity.

In the aforementioned method of detecting a chemical substance, the quantity of recovery (the quantity of attenuation suppression) of the fluorescence intensity is increased as the affinity between the chemical substance and the odorant binding protein is increased. Thus, the affinity between the chemical substance and the odorant binding protein is correlated with the quantity of recovery (the quantity of attenuation suppression) of the fluorescence intensity, and hence the affinity between the chemical substance and the odorant binding protein can be obtained on the basis of the quantity of recovery (the quantity of attenuation suppression) of the fluorescence intensity according to the aforementioned method, so that the odorant contained in the sample can be discriminated/specified on the basis of difference of this affinity.

The step of analyzing may include a step of determining the chemical substance contained in the sample on the basis of the intensity of the detected fluorescence.

In the aforementioned method of detecting a chemical substance, the quantity of recovery of the fluorescence intensity is increased as the quantity (concentration) of the chemical substance bonded to the odorant binding protein is increased. Thus, the quantity (concentration) of the chemical substance bonded to the odorant binding protein and the quantity of recovery (the quantity of attenuation suppression) of the fluorescence intensity are correlated with each other, and hence it is possible to measure the quantity (concentration) of the chemical substance in the sample, i.e., determine the chemical substance present in the sample on the basis of the quantity of recovery (the quantity of attenuation suppression) of the fluorescence intensity according to the aforementioned method.

The odorant binding protein may be bovine derivation odorant binding protein. The bovine derivation odorant binding protein widely has affinity for terpenoid, esters, aldehydes, aromatic series etc. Therefore, the aforementioned wide-ranging chemical substances can be detected with high sensitivity by employing the bovine derivation odorant binding protein for the aforementioned method.

The fluorescence obtained from the odorant binding protein is preferably fluorescence deriving from tryptophane constituting the odorant binding protein. Fluorescence obtained from tryptophane can be readily and precisely detected due to high intensity. Therefore, measurement can be readily performed with high sensitivity and high precision through such fluorescence from tryptophane.

### Brief Description of the Drawings

Fig. 1 is a schematic diagram showing an exemplary method of detecting an odorant according to an embodiment of the present invention.
Fig. 2 schematically illustrates change of fluorescence intensity of tryptophane of OBPb contained in a reaction solution.
Fig. 3 shows diagrams for illustrating a principle of recovering intensity of tryptophane of OBPb by bonding of an odorant to the OBPb.
Fig. 4 illustrates results of measurement in Inventive Example 1.
Fig. 5 illustrates results of measurement in Inventive Example 2.
Fig. 6 shows diagrams illustrating a bonding mechanism of the odorant to the OBPb and a substitution mechanism of the odorant.
Fig. 7 illustrates normal OBPb and OBPb having no C-end amino acid.
Fig. 8 illustrates results of measurement of relative fluorescence intensity change.
Fig. 9 illustrates difference spectra between fluorescence spectra at respective times and fluorescence spectra at 0 minutes with reference to OBP-norm bonded with DMO and geraniol.
Fig. 10 illustrates difference spectra between fluorescence spectra at respective times and fluorescence spectra at 0 minutes with reference to OBP-del bonded with DMO and geraniol.
Fig. 11 illustrates time change of peaks of difference spectra between fluorescence spectra with reference to OBP-norm and OBP-del bonded with DMO and geraniol.
Fig. 12 illustrates results of measurement of products of fluorescence spectra of tryptophane and tyrosine and fluorescence spectra of AMA.
Fig. 13 illustrates results of measurement of fluorescence intensity change of tryptophane bonded with AMA.
Fig. 14 illustrates results of measurement of fluorescence intensity change of AMA bonded with AMA.
Fig. 15 illustrates results of measurement of fluorescence intensity change of AMA containing respective odorants.
Fig. 16 illustrates results of measurement of fluorescence intensity change of tyrosine containing respective odorants.

### Best Mode for Carrying Out the Invention

A method of detecting a chemical substance according to the present invention applied to detection of an odorant is now described.

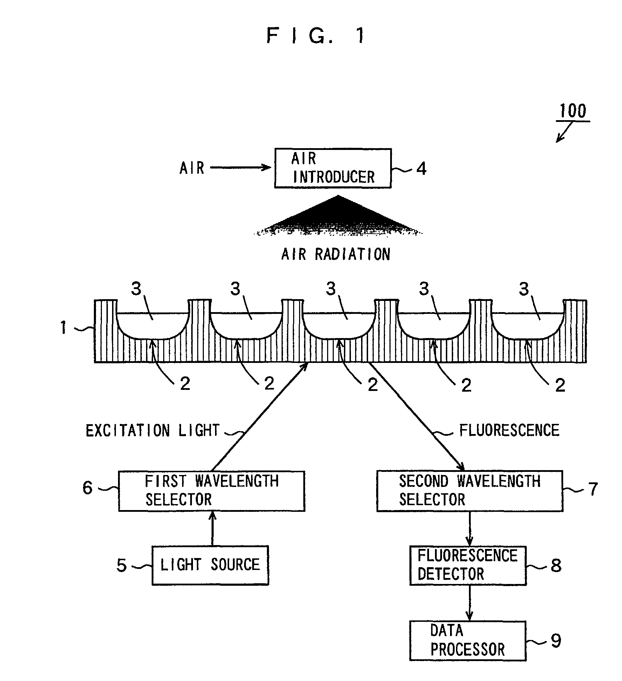

Fig. 1 is a schematic diagram showing an exemplary method of detecting an odorant according to an embodiment of the present invention. A chemical substance sensor 100 shown in Fig. 1 is formed by a microplate 1 including a plurality of holes 2 storing reaction solutions 3, an air introducer 4, a light source 5, a first wavelength selector 6, a second wavelength selector 7, a fluorescence detector 8 and a data processor 9.

In the chemical substance sensor 100, each hole 2 of the microplate 1 stores the reaction solution 3. The reaction solution 3 is prepared by dissolving bovine derivation odorant binding protein (OBP; odorant binding protein, J. Pevsner et al., J. Biolog. Chem. 265 (1990) 6118) in a phosphate buffer (PBS; phosphate buffered saline). This bovine derivation odorant binding protein is hereinafter referred to as OBPb.

Such OBPb has affinity for various types of terpenoids, cyclopenthane and jasmine derivatives, esters, musks, aldehydes and aromatic series, and can be bonded with these substances. Therefore, the OBPb can be preferably utilized for specifically detecting these various odorants. The detailed structure of the OBPb is described later.

In this case, the plurality of holes 2 store the reaction solutions 3 containing OBPb reacting with different odorants respectively. That is, a plurality of types of OBPb are employed while the plurality of types of reaction solutions 3 containing the different types of OBPb respectively are prepared and stored in the holes 2 in this case.

The aforementioned difference between the properties of the OBPb results from substitution of amino acids forming the OBPb, particularly amino acids forming binding sites. Responses between the plurality of types OBPb employed here are slightly different from each other with reference to various odorants due to such substitution of amino acids.

The aforementioned OBPb may not be naturally isolated protein but, if DNA constituting the OBPb is isolated or cloned, for example, protein obtained by translating this gene *in vitro* can also be employed.

It is also possible to employ the protein obtained by altering the base sequence of a gene coding the OBPb and changing affinity for an odorant. As to the method of altering the gene, known point mutation introduction, random muter genesis PCR, a kunkel method or the like can be preferably utilized.

In order to detect odorants with the aforementioned chemical substance sensor 100, the light source 5 first emits light. Only light of a specific wavelength included in the emitted light is transmitted through the first wavelength selector 6. The first wavelength selector 6 is formed by a monochromator or a wavelength selection filter, for example. In this case, light of 295 nm in wavelength is selectively transmitted through the first wavelength selector 6.

Each reaction solution 3, containing the OBPb, stored in each hole 2 of the microplate 1 is irradiated with the light of 295 nm in wavelength selected in the aforementioned manner. Tryptophane which is one of amino acids constituting the OBPb is excited in each reaction solution 3 due to this irradiation, and fluorescence results from the excited tryptophane.

In the fluorescence resulting from the tryptophane constituting the OBPb contained in the reaction solution 3, only fluorescence of a specific wavelength is transmitted through the second wavelength selector 7. The second wavelength selector 7 comprises a monochromator or a wavelength selection filter, for example. In this case, fluorescence of 340 nm in wavelength is selectively transmitted through the second wavelength selector 7. The fluorescence detector 8 detects the fluorescence of 340 nm in wavelength selected in this manner, and the data processor 9 processes data of the intensity of the detected fluorescence.

In the amino acids constituting the OBPb, phenylalanine and tyrosine also exhibit fluorescence characteristics in addition to the tryptophane. However, the tryptophane, having higher fluorescence intensity as compared with the phenylalanine and the tyrosine, can be readily detected. Therefore, measurement is performed here on the basis of the fluorescence from the tryptophane.

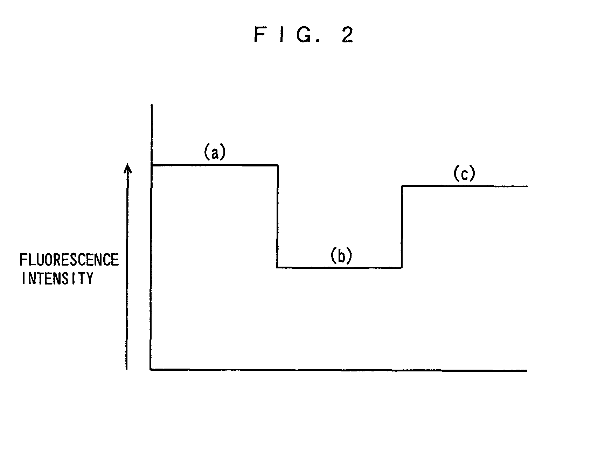

The fluorescence intensity of the tryptophane constituting each OBPb contained in each reaction solution 3 is measured in the aforementioned manner. Referring to Fig. 2, (a) schematically shows exemplary fluorescence intensity of tryptophane constituting the OBPb contained in the reaction solution 3 measured in the aforementioned manner.

When the aforementioned reaction solution 3 is continuously irradiated with the light of 295 nm, the intensity of the fluorescence resulting from the tryptophane constituting the OBPb contained in the reaction solution 3 is reduced (attenuated) as shown at (b) in Fig. 2.

In this case, air containing a plurality of odorants is introduced into each reaction solution 3 having the fluorescence intensity reduced in the aforementioned manner through the air introducer 4.

The air introducer 4 may comprise a fan and a tube, for example, for transmitting air fed by the fan to each hole 2 through the tube. The air introducer 4 may not be provided but the microplate 1 may be directly exposed to the air thereby introducing the air into the reaction solution 3. In this case, the hole 2 serves as the air introducer 4.

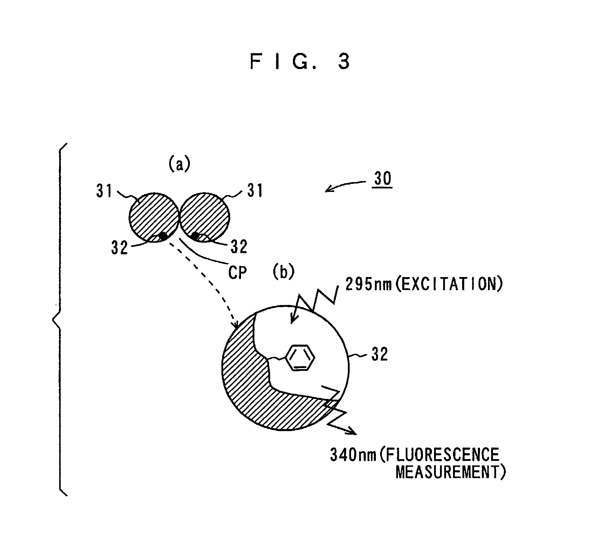

The air is introduced into each reaction solution 3 in the aforementioned manner, so that the air containing the plurality of odorants and each reaction solution 3 containing the OBPb come into contact with each other and each of the odorants contained in the air is bonded with the corresponding OBPb contained in the reaction solution 3. According to this bonding between the OBPb and the odorants, the intensity of the fluorescence resulting from the tryptophane forming the OBPb contained in the reaction solution 3 is increased. Thus, the fluorescence intensity reduced at (b) in Fig. 2 is recovered as shown at (c) in Fig. 2. The principle of such recovery of the fluorescence intensity is described later with reference to Fig. 3.

In the method of detecting an odorant according to this embodiment, such change of the fluorescence intensity caused by bonding between the odorant and the OBPb is so detected as to detect the odorant.

In this case, presence/absence of each odorant is determined from the quantity of recovery (the quantity of attenuation suppression) of the fluorescence intensity in the reaction solution 3 containing the OBPb. When the fluorescence intensity of the reaction solution 3 is recovered, for example, it is determined that the odorant corresponding to the OBPb contained in this reaction solution 3 is detected. When the fluorescence intensity of the reaction solution 3 is not recovered, on the other hand, it is determined that no odorant corresponding to the OBPb contained in this reaction solution 3 is detected.

The aforementioned method of detecting an odorant by fluorescence measurement employing OBPb can implement high measurement sensitivity at least equivalent to that of the conventional method employing an antibody. No high-priced antibody may be employed in this detection method, which can be carried out at a low cost.

The OBPb widely has binding power, along with a peak of binding power with respect to a specific odorant, also for odorants similar to this odorant. According to the aforementioned detection method employing OBPb, therefore, odorants can be widely detected.

In particular, the detection method employing OBPb can readily cope with a substance newly exhibiting necessity for detection by performing amino acid substitution of OBPb and expression in a colon bacillus for detecting this substance. Therefore, detection can be more readily performed as compared with the conventional method employing an antibody.

As hereinabove described, bonding characteristics with respect to the odorant can be readily changed in the OBPb by amino acid substitution or the like. Thus, the odorant can be discriminated by changing the bonding characteristics of the OBPb with respect to the odorant and detecting the odorant with a plurality of types of OBPb changed in the bonding characteristics respectively. The odorant can also be specified.

In the aforementioned method employing OBPb, the quantity of recovery of the fluorescence intensity in the reaction solution 3 is increased as the affinity between the odorant and the OBPb, i.e., readiness of bonding between the odorant and the OBPb is increased. Thus, the affinity between the odorant and the OBPb and the quantity of recovery of the fluorescence intensity are correlated with each other. According to the aforementioned method, therefore, the affinity between the odorant and the OBPb can be obtained on the basis of the quantity of recovery of the fluorescence intensity, and the odorant can be discriminated on the basis of difference in this affinity. Further, the odorant can also be specified.

In the aforementioned method employing OBPb, further, the quantity of recovery of the fluorescence intensity is increased as the quantity (concentration) of the odorant bonded to the OBPb is increased. Thus, the quantity (concentration) of the odorant bonded to the OBPb and the quantity of recovery of the fluorescence intensity are correlated with each other. According to the aforementioned method, therefore, the quantity (concentration) of the odorant in the air can be measured, i.e., the odorant present in the air can be determined on the basis of the quantity of recovery of the fluorescence intensity.

The principle of recovering the fluorescence intensity of the OBPb by bonding with the odorant is now described.

As shown in Fig. 3(a), OBPb 30 employed for the aforementioned detection method has a dimer structure including monomeric proteins 31 are coupled by noncovalent bond. As shown in Figs. 3(a) and 3(b), tryptophane 32 having a benzene ring is present on an interface (dimer-interface) of a central pocket CP formed between the proteins 31 constituting the OBPb 30. Fig. 3(b) is a typical enlarged view showing the structure of the tryptophane 32.

When the OBPb 30 is irradiated with the light of 295 nm in wavelength, the light excites the tryptophane 32 of the OBPb 30 so that the tryptophane 32 emits fluorescence around a wavelength of 340 nm, as shown in Figs. 3(a) and 3(b). The state of the tryptophane 32 emitting the fluorescence corresponds to the aforementioned state shown at (a) in Fig. 2.

When the OBPb 30 is bonded with no odorant, the periphery of the tryptophane 32 is under hydrophilic environment. However, an odorant molecule is so strongly hydrophobic that the periphery of the tryptophane 32 becomes hydrophobic when the odorant molecule is bonded to the central pocket CP. The fluorescence intensity of tryptophane is increased as hydrophobicity is enhanced, and hence the fluorescence from the tryptophane 32 is also increased due to the bonding of the odorant molecule.

The aforementioned change of the structure of the OBPb can be confirmed by measuring a CD (circular dichroic) spectrum.

As hereinabove described, whether or not an odorant is bonded to OBPb can be detected by detecting change of the structure of the OBPb caused by bonding with the odorant as change of the fluorescence intensity. In other words, the odorant can be detected by fluorometry employing OBPb.

While the above embodiment has been described with reference to the case of employing bovine derivation odorant binding protein (OBPb), another odorant binding protein can also be employed so far as the odorant binding protein has a dimer structure and the structure thereof is changed by bonding with an odorant so that fluorescence intensity is changed as described above.

While the odorant is detected with the OBPb in the above description, a chemical substance other than the odorant, such as environmental hormone, for example, can also be detected according to the aforementioned method employing OBPb.

Dimethyl octanol (DMO), citronellal, citronellol, geraniol, bisphenol A (BPA), dibutyl phthalate, diethyl hexyl phthalate, octyl phenol, hexyl phenol, nonyl phenol etc. can be listed as examples of the chemical substance detected by the aforementioned detection method.

### [Inventive Examples]

### [Inventive Example 1]

In the present Inventive Example, an experiment was made for discriminating four types of odorants, i.e., dimethyl octanol (DMO), citronellal, citronellol and geraniol by fluorometry employing bovine derivation odorant binding protein (OBPb).

In the present Inventive Example, an OBPb solution employed for detection was first prepared along with preparation of an odorant solution. A sample solution was prepared from the prepared OBPb and odorant solutions, for measuring the fluorescence intensity of this sample solution. The present Inventive Example is now described in detail.

### 1. Preparation of OBPb Solution and Odorant Solution

In order to prepare the OBPb solution employed for Inventive Example 1, bovine derivation odorant binding protein (OBPb) was first dissolved in a phosphate buffer (PBS; phosphate buffered saline), and PBS was further added to this OBPb solution for diluting the same until the concentration of the solution reached 250 nM. Table 1 shows the composition of the PBS as employed.

**[Table 1]**

| Composition of the PBS(phosphate buffered saline) | | |
|---|---|---|
| 140mM | NaCl | pH 7.3 |
| 27mM | KCl | |
| 101mM | Na₂HPO₄ | |
| 18mM | KH₂PO₄ | |

In order to prepare the odorant solution employed for Inventive Example 1, four types of odorants, i.e., dimethyl octanol (DMO), citronellal, citronellol and geraniol were dissolved in ethanol solutions (EtOH) respectively, for preparing an odorant solution of 10⁻² M in concentration as to each odorant.

### 2. Measurement of Fluorescence Intensity

300 µl of the OBPb solution of 250 nM in concentration and 0.3 µl of each odorant solution of 10⁻² M in concentration prepared in the aforementioned manner were mixed with each other for preparing a sample solution employed for measuring fluorescence intensity as to each of the four types of odorants. In this case, the final concentration of the odorant in each sample solution is 10 µM. A sample of only OBPb containing no odorant, i.e., that obtained by mixing an OBPb solution and an ethanol solution with each other, was also prepared as a comparative sample.

Each sample solution prepared in the aforementioned manner was introduced into a quartz cell for fluorescence while sealing an opening for preventing evaporation. The aforementioned cell was set in a cell holder of a fluorometer (F-4000 by Hitachi, Ltd.) and left to stand for 10 minutes for temperature balancing.

Then, the aforementioned fluorometer was employed for measuring the fluorescence intensity as to each of the four types of sample solutions containing the odorants and the sample solution of only the OBPb containing no odorant as follows:

In measurement of the fluorescence intensity of each sample solution, a shutter of the fluorometer was first opened for irradiating the sample solution with light of 280 nm in wavelength from a slit of 10 nm in width and exciting tryptophane constituting the OBPb contained in the sample solution. Fluorescence of 340 nm in wavelength obtained from the tryptophane excited in this manner was taken out through the slit of 10 nm in width, for measuring the intensity of the obtained fluorescence.

In this case, the switching time for the shutter of the fluorometer was set to two seconds for opening/closing the shutter at intervals of five minutes and measuring the fluorescence intensity of the sample solution over 30 minutes.

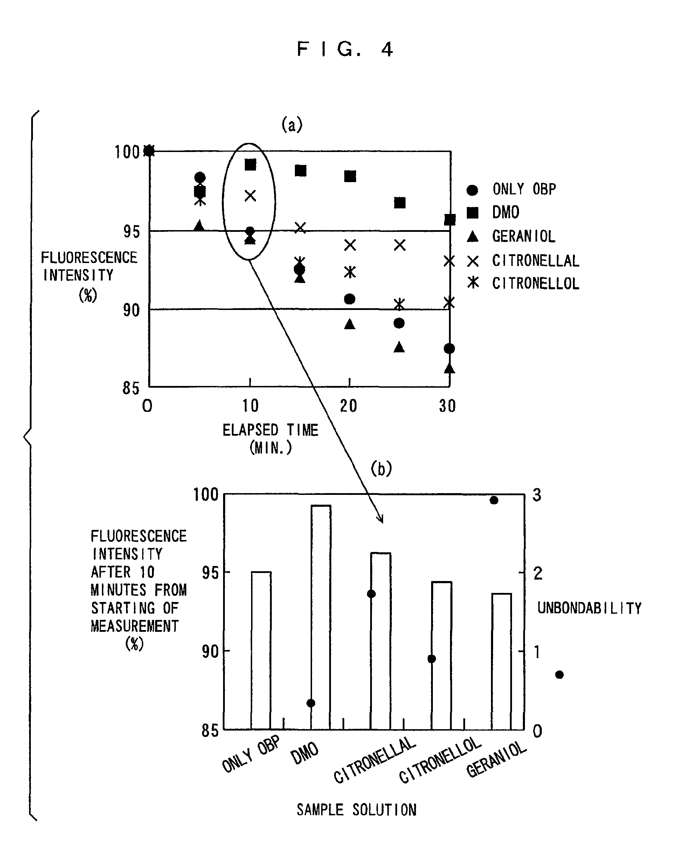

Fig. 4 illustrates diagrams showing results of the aforementioned measurement of the fluorescence intensity. Fig. 4(a) illustrates the relation between elapsed times from initiation of measurement and the fluorescence intensity values of the sample solutions. Fig. 4(b) is a model diagram showing the fluorescence intensity of each sample solution at a point of a lapse of 10 minutes from the initiation of measurement shown in Fig. 4(a) in a bar chart.

Fig. 4(b) shows a relative value of readiness of bonding (affinity) between the odorant and the OBPb in each sample solution with a circle.

Referring to Fig. 4, the point of initiation of measurement is set to the point of the elapsed time of 0 minutes, and the fluorescence intensity of the sample solution at this point is set to 100 %. Thus, the fluorescence intensity at the elapsed time of 0 minutes, i.e., the point of initiation of measurement was set to 100 % as to each sample solution for regarding this as a reference value and calculating a relative value of the fluorescence at each point every five minutes on the basis of this reference value.

As a result of measurement of the fluorescence intensity, it has been clarified that change of the fluorescence intensity varies with the types of the odorants, as shown in Figs. 4(a) and 4(b). Thus, it has been clarified that different types of odorants can be discriminated through the change of the fluorescence intensity.

As shown in Fig. 4(b), reduction of the fluorescence intensity was at the minimum in DMO having the highest affinity for the OBPb, i.e. , most readily bondable with the OBPb, while reduction of the fluorescence intensity was at the maximum in geraniol having the lowest affinity for the OBPb, i.e., most hardly bondable with the OBPb among the four types of odorants. Thus, it has been clarified that attenuation of the fluorescence intensity is reduced as the affinity between the OBPb and the odorant is increased.

The results of citronellal and citronellol are within the error range in this case, and not contradictory to the above conclusion.

It has been clarified from the above that change of the fluorescence intensity varies with the types of the odorants as hereinabove described since the affinity between the odorants and the OBPb vary with the types of the odorants. Further, it has been clarified possible to discriminate each odorant on the basis of such difference in affinity.

### [Inventive Example 2]

In the present Inventive Example, study was made as to whether or not dimethyl octanol (DMO) and bisphenol A (BPA) can be determined by fluorometry employing bovine derivation odorant binding protein (OBPb).

In the present Inventive Example, an OBPb solution employed for detection was first prepared along with preparation of DMO solutions and BPA solutions. In this case, a plurality of types of solutions different in concentration from each other were prepared as to each of DMO and BPA. Then, sample solutions were prepared with the OBPb solution, the DMO solutions and the BPA solutions prepared in the aforementioned manner, for measuring the fluorescence intensity of the sample solutions. The present Inventive Example is now described in detail.

### 1. Preparation of OBPb Solution, DMO Solution and BPA Solution

In preparation of the OBPb solution employed for Inventive Example 2, an OBPb solution of 250 nM in concentration was prepared by a method similar to that in Inventive Example 1.

In preparation of the DMO solutions and the BPA solutions employed for Inventive Example 2, on the other hand, two types of odorants of DMO and BPA were dissolved in ethanol (EtOH) respectively, for preparing a solution of 10⁻² M in concentration as to each odorant. Further, the DMO solution and the BPA solution of 10⁻² M in concentration prepared in the aforementioned manner were diluted with EtOH respectively, thereby preparing solutions of 10⁻³ M, 10⁻⁴ M, 10⁻⁵ M and 10⁻⁶ M in concentration respectively. Thus, DMO solutions and BPA solutions of 10⁻³ M, 10⁻⁴ M, 10⁻⁵ M and 10⁻⁶ M in concentration were prepared.

### 2. Measurement of Fluorescence Intensity

300 µl of the OBPb solution of 250 nM in concentration and 0.3 µl of each of the DMO solutions of 10⁻³ M, 10⁻⁴ M, 10⁻⁵ M and 10⁻⁶ M in concentration prepared in the aforementioned manner were mixed with each other thereby preparing sample solutions having final DMO concentrations of 10⁻⁹ M, 10⁻⁸ M, 10⁻⁷ M and 10⁻⁶ M respectively. Sample solutions having final concentrations of 10⁻⁹ M, 10⁻⁸ M, 10⁻⁷ M and 10⁻⁶ M respectively were prepared also as to BPA by a preparation method similar to that for the case of DMO.

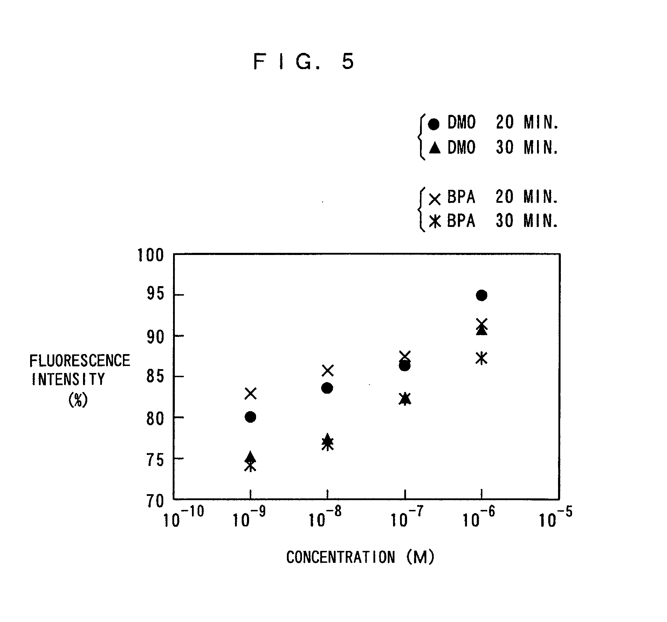

After preparing the sample solutions in the aforementioned manner, the fluorescence intensity was measured as to each sample solution by a method similar to that in Inventive Example 1. Further, the relation between the concentrations and the fluorescence intensity of DMO and BPA was investigated on the basis of results at a point after a lapse of 20 minutes from initiation of measurement and at a point after a lapse of 30 minutes from initiation of measurement among results obtained by measuring the fluorescence intensity. Fig. 5 shows the results.

Also in this case, the point of initiation of measurement was set to the point of an elapsed time of 0 minutes while setting the fluorescence intensity at this point to 100 % as a reference value for calculating a relative value of the fluorescence intensity at each point on the basis of this reference value.

As shown in Fig. 5, attenuation of the fluorescence intensity is reduced as the concentration of DMO or BPA is increased in each of the sample solutions containing DMO and BPA, and it has been clarified that the concentrations of DMO and BPA and the fluorescence intensity are correlated with each other at both of the points of after 20 minutes and after 30 minutes.

Thus, the concentrations of DMO and PBA and the fluorescence intensity are correlated with each other at each point, and hence it has been clarified that discrimination based on the fluorescence intensity of DMO and BPA is possible within the range up to 10⁻⁹ M (about 200 ppt).

### (Bonding Mechanism Model)

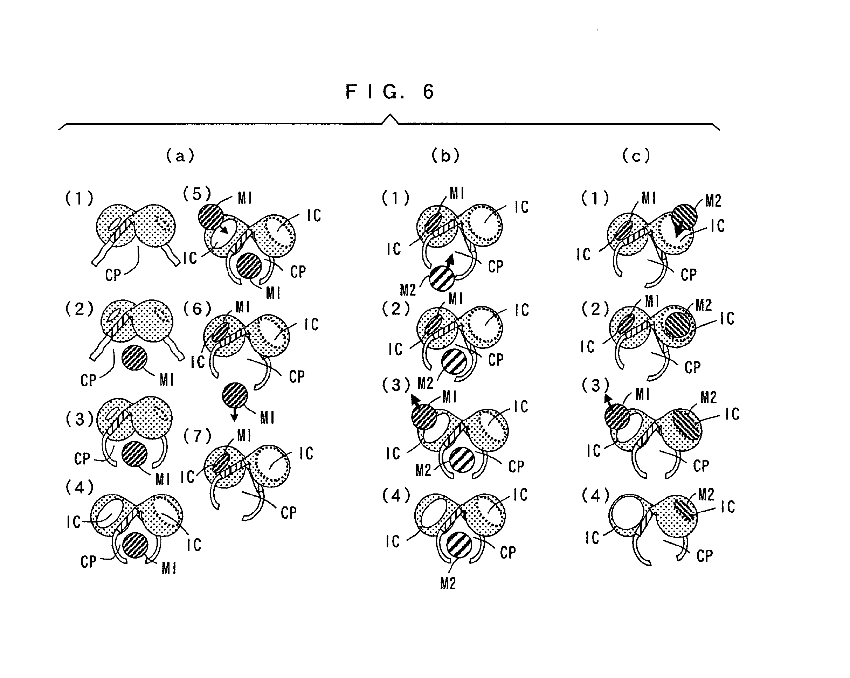

From results of an experiment described later, bonding mechanisms of odorants to OBPb and substitution mechanisms of the odorants were estimated as shown in Fig. 6.
1. An odorant M1 is first bonded to a central pocket CP. Then, an internal cavity IC opens for preparing for bonding with the odorant M1 ((1) to (4) in Fig. 6(a)).
2. When the odorant M1 is bonded to the internal cavity IC in this state, the odorant M1 having been bonded with the central pocket CP dissociates if the affinity of the odorant M1 for the OBPb is relatively high (if at least KD < 1.3 µM), i.e., if the interaction between the internal cavity IC and the odorant M1 is relatively stronger than the interaction between the central pocket CP and the odorant M1 ((5) to (7) in Fig. 6(a)), where KD represents a dissociation constant.
   If the affinity of the odorant M1 for the OBPb is relatively low (if at least KD > 3 µM), i.e. , if the interaction between the central pocket CP and the odorant M1 is stronger than the interaction between the internal cavity IC and the odorant M1, the odorant M1 separates from the internal cavity IC so that the odorant M1 consequently remains in the central pocket CP ((1) to (4) in Fig. 6(a)).
3. Another odorant M2 substitutes for the bonded odorant M1 in either one of the following two ways:
   3-1 If the affinity of the other odorant M2 for the OBPb is relatively low (at least KD > 3 µM), the odorant M1 having bound to the internal cavity IC dissociates when the other odorant M2 is bonded to the central pocket CP, so that substitution holds between the odorants M1 and M2 ((1) to (4) in Fig. 6(b)).
   3-2 If the affinity of the other odorant M2 for the OBPb is relatively high, the other odorant M2 is bonded to the internal cavity IC not previously bonded with the odorant M1 in two internal cavities IC, and the previously bonded odorant M1 dissociates from the internal cavity IC ((1) to (4) in Fig. 6(c)).

### (Demonstration of Bonding Mechanism Model)

In order to confirm whether or not the central pocket CP functions as a binding site, OBPb having no C-end amino acid forming the central pocket CP was made.

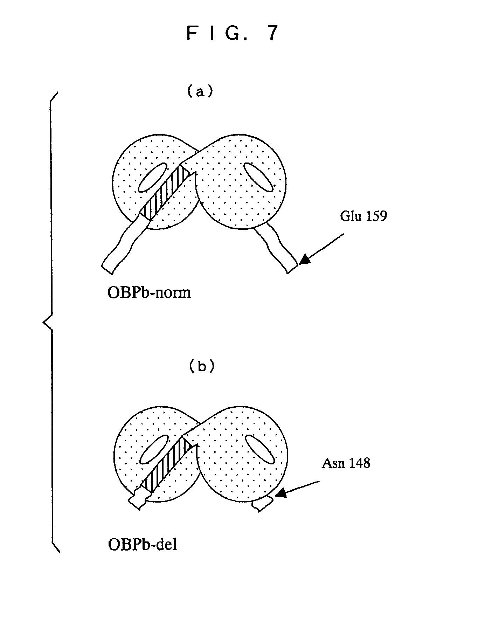

OBPb-norm shown in Fig. 7(a) is normal (unvaried) OBPb. OBPb-del shown in Fig. 7(b) is OBPb obtained by deleting Phe (phenylalanine) 149 up to Glu (glutamic acid) 159.

As to the OBPb-norm and the OBP-del, the relation between post-addition elapsed times and change of relative fluorescence intensity was investigated by adding dimethyl octanol (DMO) employed as an odorant to OBPb solutions.

The concentration of OBPb in PBS was set to 250 nM, and the concentration of a DMO solution was set to 10 µM. The DMO solution was added to the OBPb solution, which in turn was thereafter incubated at 25 degrees, for taking out part at each time and measuring fluorescence (excitation wavelength: 295 nm, fluorescence wavelength: 340 nm) of tryptophane present in the central pocket CP.

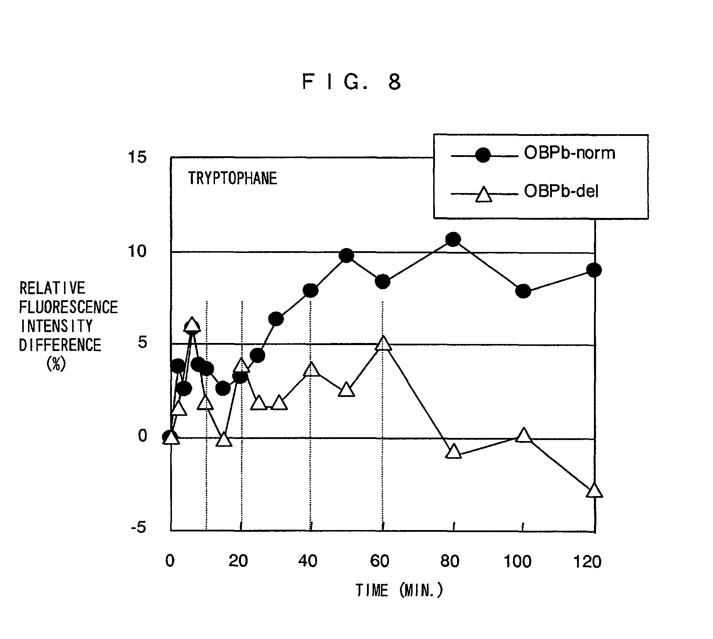

Fig. 8 shows the results of measurement of the change of relative fluorescence intensity. Referring to Fig. 8, the horizontal axis shows post-addition elapsed times, and the vertical axis shows difference in relative fluorescence intensity. The difference in relative fluorescence intensity was calculated by dividing the difference between fluorescence intensity at a time 0 and fluorescence intensity at each time by the fluorescence intensity at the time 0.

As shown in Fig. 8, the fluorescence intensity temporarily flattens in 20 minutes and thereafter rises by another stage in the OBPb-norm. Thus, the fluorescence intensity rises with time in the OBPb-norm.

In the OBP-del, on the other hand, the fluorescence intensity is finally extinguished although increase of the fluorescence intensity is also observed. That is, the OBP-del exhibited no variation with presence/absence of the odorant.

It is understood from these results that the odorant is first bonded to the central pocket CP.

Then, time variations of peaks of fluorescence spectra of tryptophane in central pockets CP bonded with odorants were investigated as to DMO and geraniol employed as odorants.

A central pocket CP forms hydrophobic environment when an odorant is bonded to the central pocket CP, while the central pocket CP forms hydrophilic environment when the odorant separates from the central pocket CP.

When tryptophane is in OBPb, the peak wavelength of the fluorescence spectrum of tryptophane is 345 nm. In general, the fluorescence wavelength of tryptophane shifts to a longer wavelength in hydrophilic environment, and shifts to a shorter wavelength in hydrophobic environment. At this point, a fluorescence spectrum upon bonding with an odorant was measured for calculating difference between the same and a spectrum at 0 minutes and investigating the relation between the peak intensity and the elapsed time.

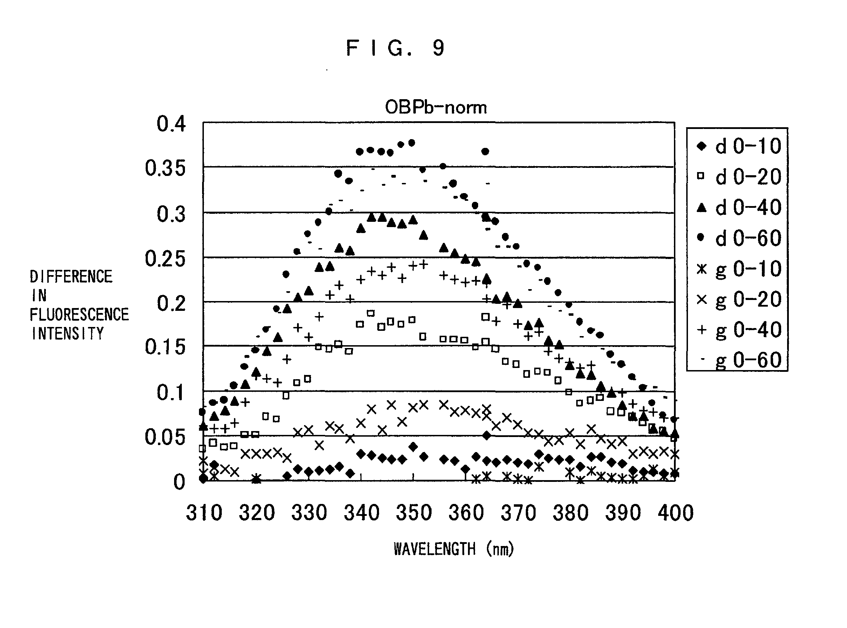

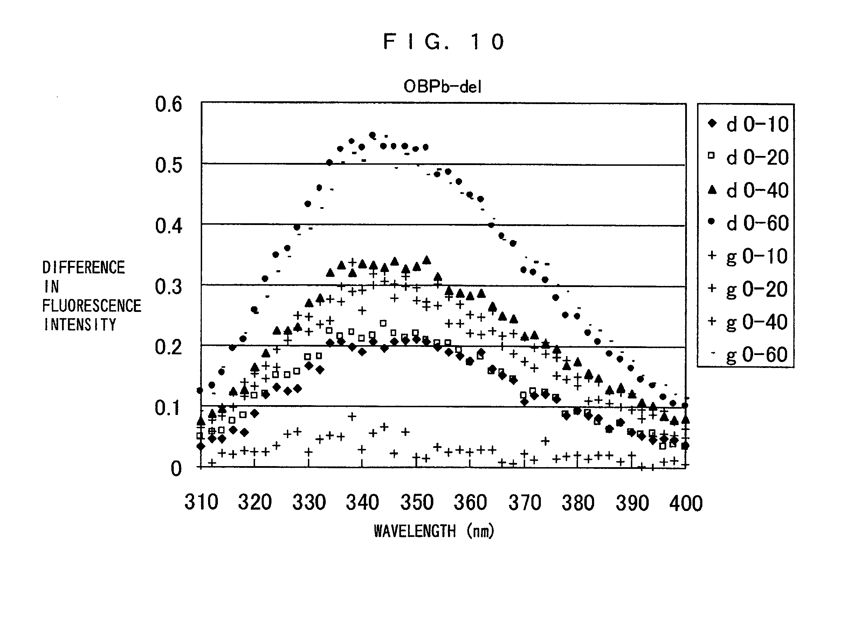

Fig. 9 illustrates a difference spectrum between a fluorescence spectrum at each time and a fluorescence spectrum at 0 minutes in a case of bonding DMO and geraniol to the OBPb-norm. Fig. 10 illustrates a difference spectrum between a fluorescence spectrum at each time and a fluorescence spectrum at 0 minutes in a case of bonding DMO and geraniol to the OBP-del.

The difference spectrum was calculated by subtracting the fluorescence spectrum at each time from the fluorescence spectrum at 0 minutes. When a peak of the fluorescence spectrum at a certain time shifts to a shorter wavelength beyond 345 nm (i.e., rendered hydrophobic), therefore, it follows that the peak of the difference spectrum shifts to a longer wavelength beyond 345 nm to the contrary.

Referring to Figs. 9 and 10, symbols d0-10, d0-20, d0-40 and d0-60 denote difference spectra between the fluorescence spectrum at 0 minutes and fluorescence spectra at 10 minutes, 20 minutes, 40 minutes and 60 minutes as to DMO respectively. Symbols g0-10, g0-20, g0-40 and g0-60 denote difference spectra between the fluorescence spectrum at 0 minutes and fluorescence spectra at 10 minutes, 20 minutes, 40 minutes and 60 minutes as to geraniol respectively.

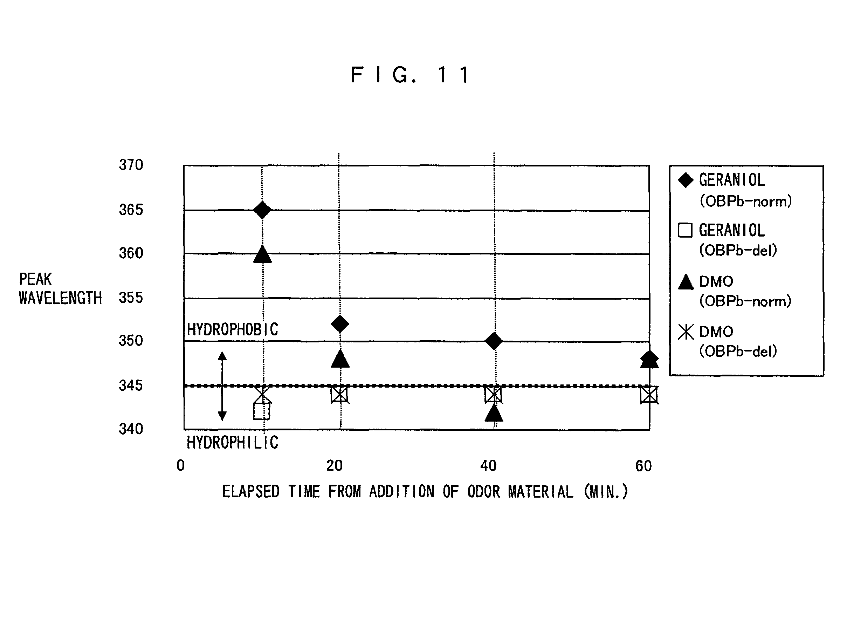

Fig. 11 shows time variations of peaks of difference spectra between fluorescence spectra in a case of bonding DMO and geraniol to the OBPb-norm and the OBP-del. Referring to Fig. 11, the vertical axis shows peak wavelengths of the difference spectra between the fluorescence spectra, and the horizontal axis shows elapsed times from immediately after addition of the odorants.

Fig. 11 shows variations of peaks of the difference spectra in the OBPb-norm and the OBP-del upon lapses of 0 minutes, 20 minutes, 40 minutes and 60 minutes after addition of DMO and geraniol.

As to the OBP-del, the peak wavelengths of the difference spectra of tryptophane remained unchanged during bonding reaction of DMO and geraniol employed as odorants. In other words, environment in the central pocket CP hardly varies with presence/absence of an odorant, and it is understood that hydrophobic interaction between the odorant molecule and the central pocket CP is low.

As to the OBP-norm, it is understood that environment in the central pocket CP is rendered hydrophobic due to increase of the peak wavelengths of the difference spectra of tryptophane. While this change to hydrophobicity is maintained during bonding reaction in geraniol, it is understood that hydrophobicity is gradually reduced and converted to hydrophilicity after 40 minutes and this hydrophilicity is converted to hydrophobicity again after 60 minutes in DMO.

In other words, geraniol remains bonded to the central pocket CP, while DMO dissociates after being bonded to the central pocket CP. A single odorant molecule is bonded to a dimer of OBPb, and hence it is conceivable that another DMO is bonded to the internal cavity IC when DMO dissociates from the central pocket CP.

This reaction assumingly progresses by such a scheme that DMO in the central pocket CP cannot remain bondable any longer but dissociates due to structural change caused by the odorant molecule bonded to the internal cavity IC.

Further, investigation was made as to how an odorant once bonded to OBPb behaves when other odorants are thereafter bonded. Aminoanthracene (AMA) which is a fluorescent odorant was employed as a previously bonded odorant, and DMO and geraniol were used as odorants added to the AMA bond.

An OBPb solution of 10 µM in concentration was prepared. AMA, DMO and geraniol were dissolved in ethanol respectively, for preparing an AMA solution, a DMO solution and a geraniol solution of 10⁻² M in concentration.

As a preparation stage for an experiment for investigating substitution for other odorants after the odorant is bonded to the OBPb, the product of fluorescence spectra of tryptophane and tyrosine and an absorption spectrum of AMA was measured.

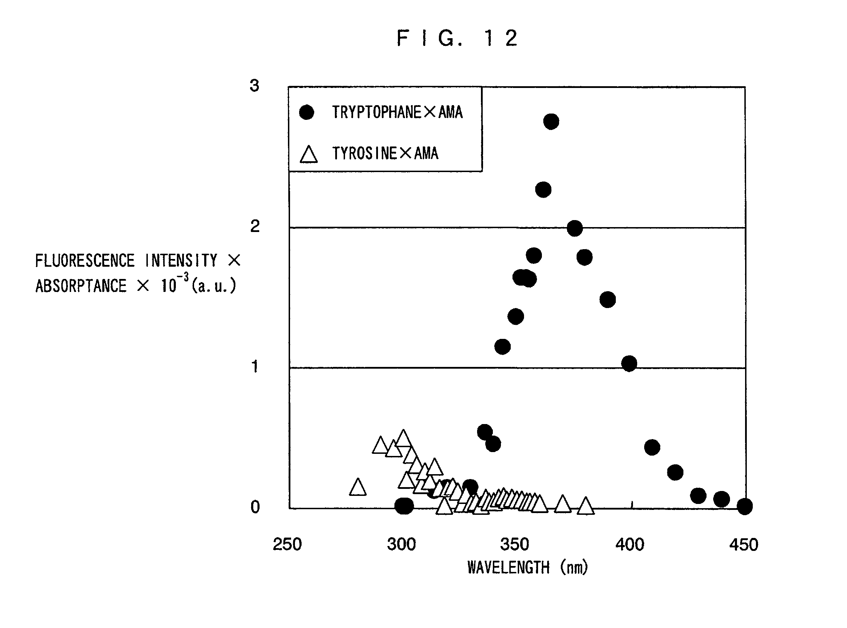

Fig. 12 illustrates results of measurement of the fluorescence spectra of tryptophane and tyrosine and the fluorescence spectrum of AMA. Referring to Fig. 12, the vertical axis shows the product of the fluorescence intensity of tryptophane or tyrosine and absorptivity of AMA, and the horizontal axis shows wavelengths.

From the results of measurement shown in Fig. 12, it is understood that AMA has a property of absorbing fluorescence from tryptophane or tyrosine. This indicates that the intensity of fluorescence from tryptophane or tyrosine reduces when AMA is present in the vicinity of tryptophane or tyrosine.

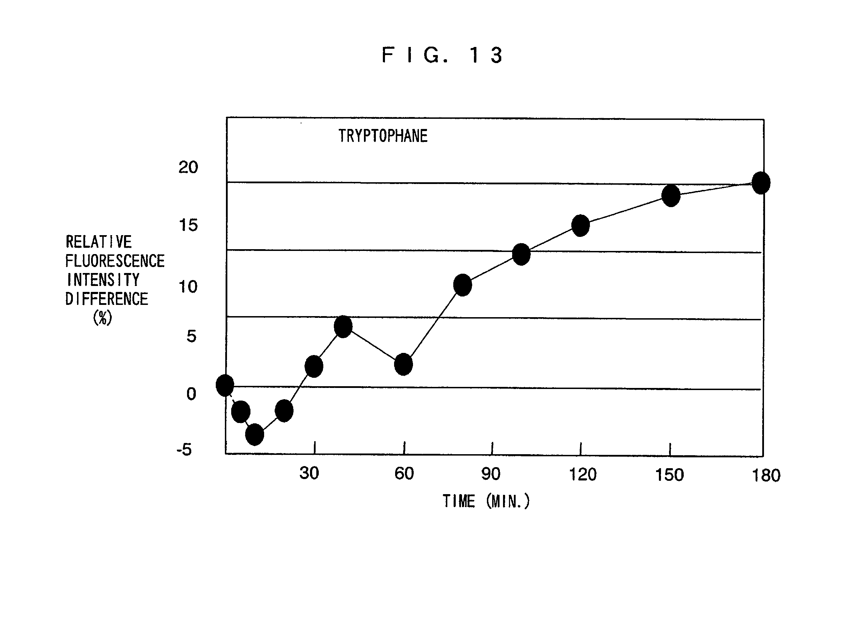

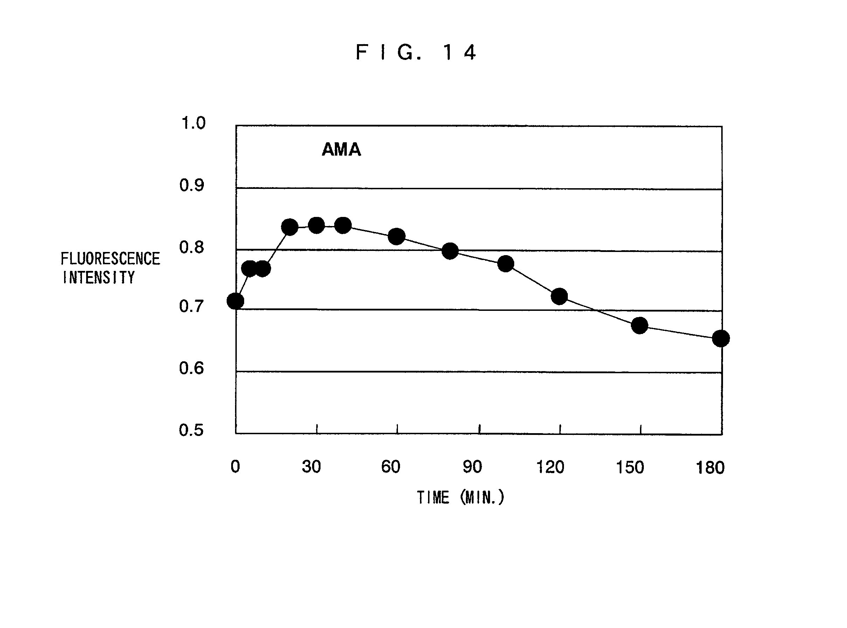

Then, time variations of fluorescence from AMA and fluorescence from tryptophane upon addition of AMA were measured. Fig. 13 illustrates results of measurement of fluorescence intensity change of tryptophane bonded with AMA. The excitation wavelength for tryptophane is 295 nm, and the fluorescence wavelength is 340 nm. Fig. 14 illustrates results of measurement of fluorescence intensity change of AMA bonded with AMA. The excitation wavelength for AMA is 295 nm, and the fluorescence wavelength is 480 nm. Referring to Figs. 13 and 14, the horizontal axes show post-addition elapsed times, and the vertical axis show relative fluorescence intensity difference levels. The relative fluorescence intensity difference was calculated by dividing the difference between fluorescence intensity at a time 0 and fluorescence intensity at each time by the fluorescence intensity at the time 0.

In the results of measurement shown in Fig. 13, the fluorescence intensity of tryptophane temporarily reduces after addition of AMA and thereafter increases . In the results of measurement shown in Fig. 14, the fluorescence intensity of AMA increases after addition of AMA, takes a constant value and thereafter reduces.

The following is considered from these results: The timing of increase of the fluorescence intensity of tryptophane and the timing of reduction of the fluorescence intensity of AMA match with each other. As hereinabove described, AMA absorbs fluorescence from tryptophane. The following is conceivable from these:

AMA temporarily enters the central pocket CP. Fluorescence from tryptophane in the central pocket CP is absorbed by AMA and reduced. At the same time, fluorescence from AMA absorbing the fluorescence from tryptophane increases for 0 to 15 minutes. Thereafter AMA is discharged from the central pocket CP. Thus, the fluorescence from tryptophane increases while the fluorescence from AMA reduces.

It is understood that a single odorant is bonded to a dimer in OBPb as hereinabove described, and hence the odorant is conceivably bonded to one internal cavity IC when the odorant is discharged from the central pocket CP. As to the bond of geraniol shown by change of hydrophobicity of the central pocket CP shown in Fig. 11, there is no bond to the internal cavity IC.

It is conceivable that whether the odorant progresses toward the internal cavity IC or remains in the central pocket CP depends on the affinity of the odorant for the OBPb. The dissociation constant KD of geraniol is about 3 µM, the dissociation constant KD of DMO is about 0.3 µM and the dissociation constant of AMA is about 1.3 µM, and hence at least the boundary between the bond to the internal cavity IC and the bond to the central pocket CP conceivably resides in 1.3 µM < KD < 3 µM.

Then, substitution with other odorants after the odorant is bonded to the OBPb was investigated.

First, 0.1 µl of an AMA solution was added to 100 µl of an OBPb solution, and left to stand at 25°C for one hour for bonding AMA to OBPb. Phosphate buffer saline (PBS) was added to this solution up to 4 ml (diluted to 40 times), 4 µl of ethanol, DMO or geraniol was added and thereafter parts of 300 µl were taken out after lapses of 0, 5, 10, 15, 20, 25, 30, 40 and 60 minutes for measuring fluorescence intensity of AMA (excitation wavelength: 295 nm, measurement wavelength: 481 nm) and fluorescence intensity of tryptophane.

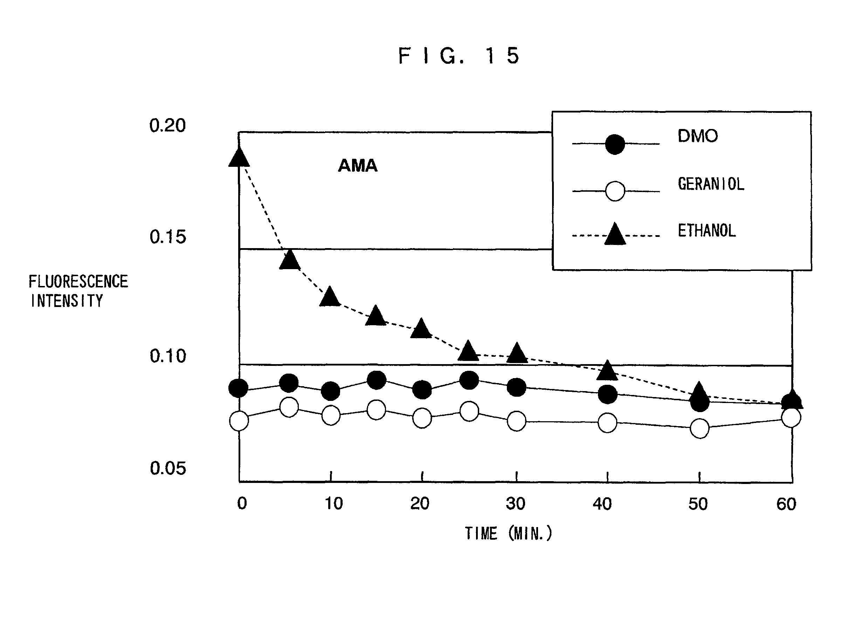

Fig. 15 illustrates results of measurement of fluorescence intensity change of AMA in a case of adding each odorant.

It is understood that the fluorescence intensity of AMA gradually reduces and AMA dissociates from the OBPb with a lapse of time when ethanol is added. On the other hand, it is understood that the fluorescence intensity of AMA reduces and AMA dissociates immediately after addition (0 minutes) in both odorants (DMO and geraniol) when adding DMO and geraniol which are odorants.

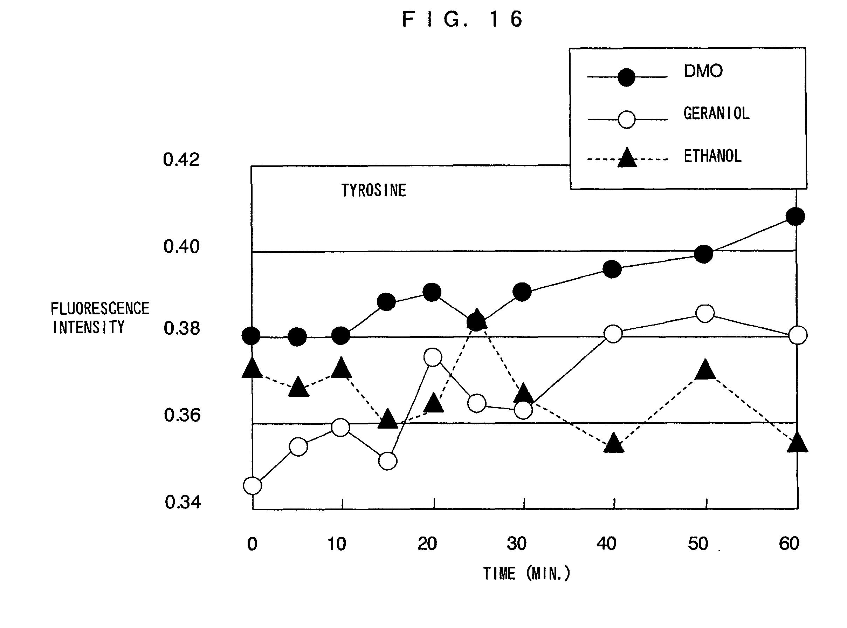

Fig. 16 illustrates results of measurement of fluorescence intensity change of tyrosine in a case of adding each odorant.

In measurement of the fluorescence intensity of tyrosine, the excitation wavelength is 250 nm, and the measurement wavelength is 300 nm. Tyrosine is present in an internal cavity of a monomer of OBPb. Therefore, dissociation of the odorant from the internal cavity IC can be measured by change of the fluorescence intensity of tyrosine (the fluorescence reduces when tyrosine becomes hydrophilic).

No change of the fluorescence intensity was observed immediately after addition (0 minutes) when adding ethanol and adding DMO. On the other hand, reduction of the fluorescence intensity was observed immediately after addition (0 minutes) when adding geraniol.

As a result, it is understood that a low-affinity odorant (at least KD > 3 µM) represented by geraniol enters the central pocket CP thereby dissociating a previously bonded odorant while a high-affinity odorant represented by DMO is bonded to the internal cavity IC thereby dissociating an odorant previously bonded to another internal cavity IC.

The results shown in Figs. 15 and 16 are obtained due to the bond between AMA and the internal cavity IC. From these results, it is possible to contrarily induce such a conclusion that an odorant such as AMA or DMO dissociating from the central pocket CP is finally bonded to the internal cavity IC.

## Claims

1. A chemical substance sensor **characterized by** detecting a substance bonded to odorant binding protein.

2. The chemical substance sensor according to claim 1, **characterized in that** said odorant binding protein has a dimer structure.

3. A chemical substance sensor comprising:
a storage that stores odorant binding protein having a dimer structure;
a sample introducer for introducing a sample into the odorant binding protein stored in said storage;
a light source that irradiates said odorant binding protein in said storage with excitation light;
a fluorescence detector that detects fluorescence obtained from said odorant binding protein; and
a data processor that processes data related to the intensity of the fluorescence detected by said fluorescence detector.

4. The chemical substance sensor according to claim 3, further comprising a first wavelength selector that selectively transmits light of a specific wavelength in the excitation light emitted from said light source and a second wavelength selector that selectively transmits light of a specific wavelength in the fluorescence obtained from said odorant binding protein.

5. The chemical substance sensor according to claim 3, wherein said odorant binding protein is bovine derivation odorant binding protein.

6. The chemical substance sensor according to claim 3, wherein the fluorescence obtained from said odorant binding protein is fluorescence deriving from tryptophane consisting said odorant binding protein.

7. A method of detecting a chemical substance for detecting a substance bonded to odorant binding protein.

8. The method of detecting a chemical substance according to claim 7, wherein said odorant binding protein has a dimer structure.

9. A method of detecting a chemical substance comprising steps of:
bringing a sample into contact with odorant binding protein having a dimer structure;
irradiating said odorant binding protein brought into contact with said sample with excitation light for obtaining fluorescence from said odorant binding protein;
detecting the fluorescence obtained from said odorant binding protein; and
analyzing a chemical substance contained in said sample on the basis of the intensity of said detected fluorescence.

10. The method of detecting a chemical substance according to claim 9, wherein said step of analyzing includes a step of comparing the intensity of fluorescence obtained from said odorant binding protein bonded with no chemical substance with the intensity of said detected fluorescence and determining presence/absence of said chemical substance on the basis of the result of the comparison.

11. The method of detecting a chemical substance according to claim 9, wherein said step of analyzing includes a step of analyzing affinity between the chemical substance contained in said sample and said odorant binding protein on the basis of the intensity of said detected fluorescence and discriminating the chemical substance contained in said sample on the basis of said affinity.

12. The method of detecting a chemical substance according to claim 9, wherein said step of analyzing includes a step of determining the chemical substance contained in said sample on the basis of the intensity of said detected fluorescence.

13. The method of detecting a chemical substance according to claim 9, wherein said odorant binding protein is bovine derivation odorant binding protein.

14. The method of detecting a chemical substance according to claim 9, wherein the fluorescence obtained from said odorant binding protein is fluorescence deriving from tryptophane constituting said odorant binding protein.
